(19) Europäisches Patentamt
European Patent Office
Office européen des brevets

(11) Veröffentlichungsnummer : **0 039 017**
**B1**

(12) # EUROPÄISCHE PATENTSCHRIFT

(45) Veröffentlichungstag der Patentschrift : **28.08.85**

(51) Int. Cl.⁴ : **C 08 G 59/42**, C 08 G 59/24, C 08 G 59/68

(21) Anmeldenummer : **81102961.0**

(22) Anmeldetag : **16.04.81**

(54) **Verfahren zur Herstellung transparenter Giessharze.**

(30) Priorität : **25.04.80 DE 3016103**

(43) Veröffentlichungstag der Anmeldung : **04.11.81 Patentblatt 81/44**

(45) Bekanntmachung des Hinweises auf die Patenterteilung : **28.08.85 Patentblatt 85/35**

(84) Benannte Vertragsstaaten : **AT CH DE FR IT LI NL**

(56) Entgegenhaltungen :
**CH-A- 546 806**
**DE-A- 1 645 274**
**DE-A- 2 254 487**
**DE-A- 2 642 465**
**US-A- 3 340 212**
**US-A- 3 689 444**

(73) Patentinhaber : **Siemens Aktiengesellschaft**
**Berlin und München Wittelsbacherplatz 2**
**D-8000 München 2 (DE)**

(72) Erfinder : **Reeh, Ulrike**
**Hollerstrasse 7a**
**D-8000 München 50 (DE)**
Erfinder : **Denk, Hans, Dr.**
**Hauserstrasse 38**
**D-8035 Gauting (DE)**

**EP 0 039 017 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung transparenter Gießharze, hergestellt aus aromatischen flüssigen Diglycidyläthern, Carbonsäureanhydriden, Metallsalzen von Carbonsäuren und Hilfs- und Zusatzstoffen. Die Massen eignen sich besonders für den Verguß von optoelektronischen Bauelementen.

Aus der CH-A-546 806 ist die Herstellung von Kunstharzformkörpern durch Härtung von flüssigen Polyepoxiden mit einem Härtersystem aus Säureanhydrid, Zinkoctoat, gegebenenfalls Triphenylphosphit als Lösungsmittel, und einem Addukt aus Phosphorsäure und einem aliphatischen Glycidyläther bekannt.

Es sind ferner Gießharzmassen zum Verguß von optoelektronischen Bauelementen auf Basis säureanhydridhärtbarer Cycloaliphaten bekannt (DE-A-2 642 465).

Aus der DE-A-1 589 264 ist bekannt, daß durchsichtige säureanhydridhärtbare Epoxidgießharze auf Basis von Bisphenol A für die Abdeckung bzw. Umhüllung elektronischer Bauelemente geeignet sind.

Nachteilig der bekannten Epoxidharzmassen auf Bisphenol A/Säureanhydridbasis, die unter Verwendung von üblichen Reaktionsbeschleunigern wie tertiären Aminen, $BF_3$-Aminkomplexen oder anderen aminhaltigen Verbindungen hergestellt werden, ist die relativ lange Härtezeit bis zur Entformung der damit vergossenen Bauelemente. Andererseits führen diese aminhaltigen Beschleuniger bei Temperaturen über 80 °C in kurzer Zeit zur Vergilbung der sich bildenden Formstoffe.

Diese weisen zwar die oben bei aromatischen Glycidylätherharzen erwähnten Nachteile nicht auf, sie sind aber in ihren mechanischen Eigenschaften wesentlich schlechter. So zeigen sie eine niedrigere Schlagzähigkeit und Biegefestigkeit sowie eine mangelhafte Haftung auf Substraten. Diese Sprödigkeit wirkt sich besonders nachteilig auf die Temperaturschockbeanspruchung, Zug-, Schlag- und Druckeinwirkung vergossener optoelektronischer Bauelemente aus. Bei einigen optoelektronischen Bauelementen bewirken derartig harte Formstoffe durch Erzeugung mechanischer Spannung z. B. auf empfindliche Chips Funktionsbeeinträchtigungen.

Der Erfindung lag die Aufgabe zugrunde,

1. Gießharzmassen herzustellen, die bei Raumtemperatur über längere Zeit verarbeitbar sind und bei erhöhter Temperatur schnell härten,

2. daraus mechanisch hochwertige Formstoffe mit guter Haftung zu erzeugen, die im Temperaturanwendungsbereich optoelektronischer Bauelemente mindestens 1/2 Jahr bei 120 °C keine wesentliche Verminderung der Lichtdurchlässigkeit durch Vergilbung bzw. Verfärbung aufweisen.

Diese Aufgabe wurde erfindungsgemäß dadurch gelöst, daß man zu einem bei Raumtemperatur flüssigen Vorgemisch (a) aus Zinkoctoat, einem niedermolekularen sauren Ester und gegebenenfalls einem organischen Phosphit flüssiges Säureanhydrid (b) zumischt und diese Mischung aus (a) und (b) zu flüssigen aromatischen Diglycidyläthern zugibt, vorzugsweise bei Temperaturen $\leq$ 50 °C.

Ein besonderer Vorteil des erfindungsgemäßen Verfahrens besteht darin, daß bei Raumtemperatur flüssige Gießharzvorgemische aufbereitet werden und auch ihre Verarbeitung bei Raumtemperatur erfolgen kann. Aus diesen Gründen ist die Aufbereitung der Gießharzmasse aus den Gießharzvorgemischen (Überführen in die Vorratsbehälter, Dosieren und Mischen) und ihre Verarbeitung (Portionieren und Vergießen) mit einfachen technischen Maßnahmen durchführbar. Die lange Gebrauchsdauer der flüssigen Reaktionsharzmischung ist besonders vorteilhaft für die Erzeugung einer gleichmäßig guten Qualität der Bauelemente, weil keine wesentliche Änderung der Viskosität während der Verarbeitung erfolgt. Andererseits bringt die schnelle Härtung bei erhöhter Temperatur wegen der kurzen Zeit bis zur Entformung für die Herstellung vergossener Bauelemente in großen Stückzahlen große wirtschaftliche Vorteile, insbesondere durch kurze Formbelegungszeiten.

Zur Durchführung des erfindungsgemäßen Verfahrens wird Zinkoctoat mit einem flüssigen niedermolekularen sauren Ester gemischt und gegebenenfalls mit Diphenyldecylphosphit versetzt. In diese Mischung wird der bei 80 °C aufgeschmolzene Härter Hexahydrophthalsäureanhydrid eingerührt. Nach dem Abkühlen erhält man ein bei Raumtemperatur dünnflüssiges Gemisch (ca. 200 mPa · s). Diese angegebene Reihenfolge ist einzuhalten, da sonst keine klare, haltbare Lösung erhalten wird.

Überraschenderweise zeigte sich, daß das in der DE-A-2 642 465 verwendete Härter-Beschleuniger-Gemisch, bestehend aus Hexahydrophthalsäureanhydrid, Hexahydrophthalsäuremonoäthylester, Diphenyldecylphosphit und Zinkoctoat auch bei Verwendung von Diglycidyläthern des Bisphenol A bzw. Bisphenol F bzw. deren Mischungen als Harzbasis Gießharzmassen mit schneller Härtung und Gießharzformstoffe mit sehr guter Wärmestabilität und zusätzlich guten mechanischen Eigenschaften liefert. Weitere als Lösungsvermittler für Zinkoctoat wirkende saure Ester können auch andere kurzkettige saure Ester, erhalten aus Glykolen und Säureanhydriden z. B. hergestellt aus 1 Mol Äthylenglykol und 2 Mol Hexahydrophthalsäureanhydrid der Formel

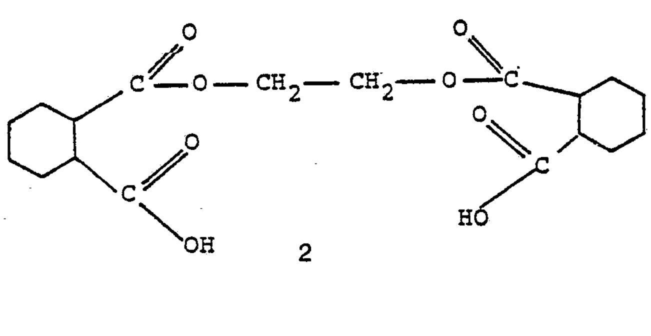.

verwendet werden. Während übliche Beschleunigungsmittel für die Härtung von aromatischen Diglycidyläthern wie tertiäre Amine, $BF_3$-Aminkomplexe, Formstoffe liefern, die bei Wärmealterung leicht vergilben, erhält man bei Verwendung von Zinkoctoat als Beschleuniger Formstoffe, die bei Temperaturen bis 120 °C ihre Transparenz mindestens über 1/2 Jahr beibehalten.

Dies ist umso erstaunlicher, als bisher allgemein die Meinung vorherrschte, daß man derartige Lichtechtheiten nicht erreichen könne, sobald größere Anteile konjugierter Aromtensysteme enthalten sind.

Ein für die Durchführung des erfindungsgemäßen Verfahrens besonders geeigneter Härter ist Hexahydrophthalsäureanhydrid (FP = 65 °C). Mit anderen bei Raumtemperatur flüssigen Säureanhydriden wie Methylhexahydrophthalsäureanhydrid oder Methylnadicanhydrid oder eutektischen Gemischen anderer Säureanhydride, die bei Raumtemperatur flüssig sind, tritt bei Lagerung leicht eine Gelbfärbung des Vorgemisches ein.

Als besonders geeignetes organisches Phosphit hat sich Diphenyldecylphosphit erwiesen. Es wirkt als Oxidationsstabilisator und ist bei Raumtemperatur problemlos in einer Mischung aus Zinkoctoat und saurem Ester löslich. Geeignete flüssige aromatische Diglycidyläther sind solche auf der Basis von Bisphenol A und Bisphenol F und deren Mischungen.

Die nach dem erfindungsgemäßen Verfahren erhaltenen Vergußmassen können zum Abdecken oder Umhüllen von optoelektronischen Bauelementen wie z. B. Lumineszenzdioden, Fotodioden, Fototransistoren und zum Vergruß von Lumineszenzdioden-Displays verwendet werden.

Die Erfindung wird anhand von folgenden Beispielen näher erläutert :

## Beispiel 1

Herstellung des Vorgemisches Komponente A :

100 Gewichtsteile des Diglycidyläthers des Bisphenols A mit einem Wert von 0,57 ± 0,01 Mol/100 g werden auf 60 °C aufgewärmt und bei dieser Temperatur 0,000 15 Gewichtsteile des optischen Aufhellers Waxoline violett A® eingerührt. Vor dem Zusammenmischen mit Komponente B wird die Mischung auf Raumtemperatur abgekühlt.

Herstellung des Gießharzvorgemisches Komponente B :

16 Gewichtsteile des sauren Esters, Hexahydrophthalsäuremonoäthylester (falls er kristallisiert ist, wird er bei 35-40 °C aufgeschmolzen) werden mit 6 Gewichtsteilen Zinkoctoat und 7 Gewichtsteilen Diphenyldecylphosphit bei Raumtemperatur homogen vermischt. In diese Mischung werden 71 Gewichtsteile des bei 80 °C aufgeschmolzenen Härters Hexahydrophthalsäureanhydrid eingerührt. Diese Mischung wird auf Raumtemperatur abgekühlt.

Herstellen der reaktiven Gießharzmasse :

100 Gewichtsteile der Komponente A werden mit 100 Gewichtsteilen der Komponente B bei Raumtemperatur homogen vermischt und gegebenenfalls entlüftet.

Diese gebrauchsfertige reaktive Harzmischung weist eine sehr lange Gebrauchsdauer auf und zeigt nach 8 Stunden bei Raumtemperatur so gut wie keine Erhöhung der Fließviskosität.

Eigenschaftswerte der Gießharzmasse und des Formstoffes sind aus der Tabelle ersichtlich.

## Beispiel 2

Herstellung des Gießharzvorgemisches Komponente A :

100 Gewichtsteile des Diglycidyläthers des Bisphenols F mit einem Epoxidwert von 0,60 ± 0,01 Mol/100 g werden auf 60 °C aufgewärmt und bei dieser Temperatur 0,000 15 Gewichtsteile des optischen Aufhellers Waxoline violett A® eingerührt. Vor dem Zusammenmischen mit Komponente B wird die Mischung auf Raumtemperatur abgekühlt.

Herstellung des Gießharzvorgemisches Komponente B :

17 Gewichtsteile des sauren Esters, Hexahydrophthalsäuremonoäthylester (falls er kristallisiert ist, wird er bei 35-40 °C aufgeschmolzen) werden 6 Gewichtsteile Zinkoctoat und 7 Gewichtsteile Diphenyldecylphosphit bei Raumtemperatur homogen vermischt. In diese Mischung werden 75 Gewichtsteile des bei 80 °C aufgeschmolzenen Härters Hexahydrophthalsäureanhydrid eingerührt. Diese Mischung wird auf Raumtemperatur abgekühlt.

Herstellung der reaktiven Gießharzmasse :

100 Gewichtsteile der Komponente A werden mit 105 Gewichtsteilen der Komponente B bei Raumtemperatur homogen vermischt und gegebenenfalls entlüftet.

Diese gebrauchsfertige reaktive Harzmischung weist eine sehr lange Gebrauchsdauer auf und zeigt nach 8 Stunden bei Raumtemperatur so gut wie keine Erhöhung der Fließviskosität.

Eigenschaftswerte der Gießharzmasse und des Formstoffes siehe Tabelle.

## Beispiel 3

Herstellung des Gießharzvorgemisches Komponente A :

100 Gewichtsteile des Diglycidyläthers des Bisphenols A mit einem Epoxidwert von

0,57 ± 0,01 Mol/100 g werden auf 60 °C aufgewärmt und bei dieser Temperatur 0,000 15 Gewichtsteile des optischen Aufhellers Waxoline violett A® eingerührt. Vor dem Zusammenmischen mit Komponente B wird diese Mischung auf Raumtemperatur abgekühlt.

Herstellung des Gießharzvorgemisches Komponente B :

15 Gewichtsteile des sauren Esters, hergestellt aus 1 Mol Äthylenglykol und 2 Mol Hexahydrophthalsäureanhydrid (der kristallisierte Ester wird bei 100 °C aufgeschmolzen) werden mit 6 Gewichtsteilen Zinkoctoat und 7 Gewichtsteilen Diphenyldecylphosphit bei 40-60 °C homogen vermischt. In diese Mischung werden 72 Gewichtsteile des bei 80 °C aufgeschmolzenen Härters Hexahydrophthalsäureanhydrid eingerührt. Diese Mischung wird auf Raumtemperatur abgekühlt.

Herstellung der reaktiven Gießharzmasse :

100 Gewichtsteile der Komponente A werden mit 100 Gewichtsteilen der Komponente B bei Raumtemperatur homogen vermischt und gegebenenfalls entlüftet.

Diese gebrauchsfertige reaktive Harzmischung weist eine sehr lange Gebrauchsdauer auf und zeigt nach 8 Stunden bei Raumtemperatur so gut wie keine Erhöhung der Fließviskosität.

Eigenschaftswerte der Gießharzmasse und des Formstoffes sind aus der Tabelle ersichtlich.

## Beispiel 4

Herstellung des Gießharzvorgemisches Komponente A :

100 Gewichtsteile des Diglycidyläthers des Bisphenols A mit einem Epoxidwert von 0,57 ± 0,01 Mol/100 g werden bei 60 °C aufgewärmt und bei dieser Temperatur 0,000 15 Gewichtsteile des optischen Aufhellers Waxoline violett A eingerührt. Vor dem Zusammenmischen mit Komponente B wird diese Mischung auf Raumtemperatur abgekühlt.

Herstellung des Gießharzvorgemisches Komponente B :

11 Gewichtsteile des sauren Esters, hergestellt aus 1 Mol 1,2-Propandiol und 2 Mol Hexahydrophthalsäureanhydrid (der kristallisierte Ester wird bei 100-120 °C aufgeschmolzen) werden mit 6 Gewichtsteilen Zinkoctoat und 7 Gewichtsteilen Diphenyldecylphosphit bei 60-80 °C homogen vermischt. In diese Mischung werden 76 Gewichtsteile des bei 80 °C aufgeschmolzenen Härters Hexahydrophthalsäureanhydrid eingerührt. Diese Mischung wird auf Raumtemperatur abgekühlt.

Herstellen der reaktiven Gießharzmasse :

100 Gewichtsteile der Komponente A werden mit 100 Gewichtsteilen der Komponente B homogen vermischt und gegebenenfalls entlüftet.

Diese gebrauchsfertige reaktive Harzmischung weist eine sehr lange Gebrauchsdauer auf und zeigt nach 8 Studen Lagerung bei Raumtemperatur so gut wie keine Erhöhung der Fleißviskosität.

Eigenschaftswerte der Gießharzmasse und des Formstoffes sind aus der Tabelle ersichtlich.

## Beispiel 5

Herstellung des Vorgemisches Komponente A :

100 Gewichtsteile des Diglycidyläthers des Bisphenols A mit einem Epoxidwert von 0,57 ± 0,01 Mol/100 g werden auf 60 °C aufgewärmt und bei dieser Temperatur 0,000 15 Gewichtsteile des optischen Aufhellers Waxoline violett A® eingerührt. Vor dem Zusammenmischen mit Komponente B wird die Mischung auf Raumtemperatur abgekühlt.

Herstellung des Gießharzvorgemisches Komponente B :

16 Gewichtsteile des sauren Esters, Hexahydrophthalsäuremonoäthylester (falls er kristallisiert ist, wird er bei 35-40 °C aufgeschmolzen) werden mit 6 Gewichtsteilen Zinkoctoat bei Raumtemperatur homogen vermischt. In diese Mischung werden 71 Gewichtsteile des bei 80 °C aufgeschmolzenen Härters Hexahydrophthalsäureanhydrid eingerührt. Diese Mischung wird auf Raumtemperatur abgekühlt.

Herstellen der reaktiven Gießharzmasse :

100 Gewichtsteile der Komponente A werden mit 93 Gewichtsteilen der Komponente B bei Raumtemperatur homogen vermischt und gegebenenfalls entlüftet.

Die gebrauchsfertige reaktive Harzmischung weist eine sehr lange Gebrauchsdauer auf und zeigt nach 8 Studen bei Raumtemperatur so gut wie keine Erhöhung der Fließviskosität.

Eigenschaftswerte der Gießharzmasse und des Formstoffes sind aus der Tabelle ersichtlich.

Die in der folgenden Tabelle angegebenen Daten sind den Verhältnissen entnommen, die man beim Verguß von Lumineszenzdioden der 5 mm Bauform, vergossen in Stahlformen, erhält. Hierbei wurde die Mischung bei Raumtemperatur hergestellt, das Harz in die auf 150 °C aufgeheizten Stahlkavitäten eindosiert und nach 5 bis 7 Minuten entformt. Die volle Aushärtung erfolgte als Schüttgut 4 Stunden bei 150 °C.

Martenstemperatur, Biegefestigkeit, Schlagzähigkeit und Biegewinkel wurden parallel zum Bauelementeverguß an Normstäben bzw. Dynstattproben ermittelt.

## Beispiel 6

Herstellung des Gießharzvorgemisches Komponente A :

100 Gewichtsteile des Diglycidyläthers des Bisphenols A mit einem Epoxidwert von 0,57 ± 0,01 Mol/100 g werden auf 60 °C aufgewärmt und bei dieser Temperatur 0,000 15 Gewichtsteile des optischen Aufhellers Waxoline violett A® eingerührt. Vor dem Zusammenmischen mit Komponente B wird diese Mischung auf Raumtemperatur abgekühlt.

Herstellung des Gießharzvorgemisches Komponente B :

18 Gewichtsteile des sauren Esters, hergestellt aus 1 Mol 3-Methylpentandiol-1,5 und 2 Mol Hexahydrophthalsäureanhydrid (der Ester wird bei 80 °C aufgeschmolzen) werden mit 6 Gewichtsteilen Zinkoctoat und 7 Gewichtsteilen Diphenyldecylphosphit bei 60 °C gemischt. In diese Mischung werden 72 Gewichtsteile des bei 80 °C aufgeschmolzenen Härters Hexahydrophthalsäureanhydrid eingerührt. Zur besseren Durchmischung wird diese Mischung auf 40 + 5 °C gehalten.

Herstellung der Gießharzmasse :

100 Gewichtsteile der Komponente A werden mit 103 Gewichtsteilen der Komponente B (40 + 5 °C) homogen vermischt und gegebenenfalls entlüftet.

## Beispiel 7

Gießharzvorgemisch Komponente A :

Diglycidyläther des Bisphenols A mit einem Epoxidwert von 0,57 ± 0,01 Mol/100.

Herstellung des Gießharzvorgemisches Komponente B :

19 Gewichtsteile des sauren Esters, hergestellt aus 1 Mol 3-Methylpentandiol-1,5 und 2 Mol Methylhexahydrophthalsäureanhydrid (der Ester wird bei 90 °C aufgeschmolzen) werden mit 6 Gewichtsteilen Zinkoctoat und 7 Gewichtsteilen Diphenyldecylphosphit bei 60 °C gemischt. In diese Mischung werden 79 Gewichtsteile des bei Raumtemperatur flüssigen Härters Methylhexahydrophthalsäureanhydri d beigemischt. Zur besseren Durchmischung wird diese Mischung auf 40 + 5 °C gehalten.

Herstellung der Gießharzmasse :

100 Gewichtsteile der Komponente A werden mit 111 Gewichtsteilen der Komponente B (40 + 5 °C) homogen vermischt und gegebenenfalls entlüftet.

## Beispiel 8

Gießharzvorgemisch Komponente A :

Diglycidyläther des Bisphenol A mit einem Epoxidwert von 0,57 ± 0,01 Mol/100 g.

Herstellung des Gießharzvorgemisches Komponente B :

43 Gewichtsteile des sauren Esters, hergestellt aus 1 Mol Rizinusöl und 3 Mol Hexahydrophthalsäureanhydrid werden mit 6 Gewichtsteilen Zinkoctoat und 7 Gewichtsteilen Diphenyldecylphosphit bei 60 °C gemischt. In diese Mischung werden 72 Gewichtsteile des bei 80 °C aufgeschmolzenen Härters Hexahydrophthalsäureanhydrid eingerührt. Diese Mischung wird zur besseren Durchmischung auf 40 + 5 °C gehalten.

Herstellung der Gießharzmasse :

100 Gewichtsteile der Komponente A werden mit 128 Gewichtsteilen der Komponente B (40 + 5 °C) homogen vermischt und gegebenenfalls entlüftet.

(Siehe Tabelle Seite 6)

| Gießharz | Gelierzeit bei 150° | Martens-temp. °C | Biegefestigkeit N/mm² | Schlagzähigkeit Nmm/mm² | Biegewinkel < > = ohne Bruch |
|---|---|---|---|---|---|
| Beispiel 1: | 2'10'' | 84 | 141 | 12 | <21°> |
| Beispiel 2: | 2'00'' | 75 | 146 | 15 | <22°> |
| Beispiel 3: | 2'05'' | 84 | 138 | 12 | <21°> |
| Beispiel 4: | 2'00'' | 100 | 141 | 12 | <19°> |
| Beispiel 5: | 2'10'' | 86 | 138 | 11 | <19°> |
| Beispiel 6: | 2'00'' | 84 | 147 | 10 | <26°> |
| Beispiel 7: | 1'55'' | 91 | 147 | 9 | <25°> |
| Beispiel 8: | 1'55'' | 55 | 130 | 10 | <24°> |

3. Verfahren zur Herstellung transparenter Gießharze nach Anspruch 1 und 2, dadurch gekennzeichnet, daß man als organisches Phosphit Diphenyldecylphosphit verwendet.

4. Verfahren zur Herstellung transparenter Gießharze nach Anspruch 1 bis 3, dadurch gekennzeichnet, daß man einen niedermolekularen sauren Ester der Formel

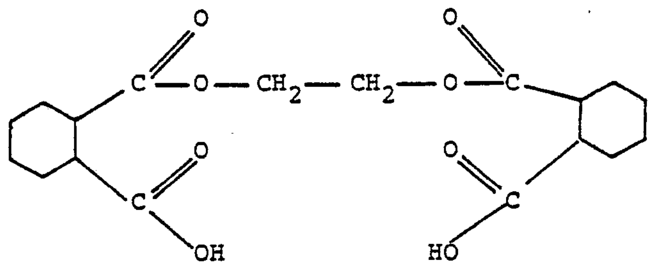

werwendet.

**Patentansprüche**

1. Verfahren zur Herstellung transparenter Gießharze, insbesondere für optoelektronische Bauelemente, hergestellt aus aromatischen flüssigen Diglycidyläthern, Carbonsäureanhydriden, Metallsalzen von Carbonsäuren und Hilfs- und Zusatzstoffen, dadurch gekennzeichnet, daß man zu einem bei Raumtemperatur flüssigen Vorgemisch (a) aus Zinkoctoat, einem niedermolekularen sauren Ester und gegebenenfalls einem organischen Phosphit flüssiges Säureanhydrid (b) zumischt und diese Mischung aus (a) und (b) zu flüssigen aromatischen Diglycidyläthern zugibt.

2. Verfahren zur Herstellung transparenter Gießharze nach Anspruch 1, dadurch gekennzeichnet, daß man die Mischung aus (a) und (b) bei Temperaturen ≤ 50 °C zu flüssigen aromatischen Diglycidyläthern zugibt.

**Claims**

1. Process for producing transparent casting resins, in particular for optoelectronic parts, produced from aromatic liquid diglycidyl ethers, carboxylic acid anhydrides, metal salts of carboxylic acids and auxiliary and additional substances, characterised in that liquid acid anhydride (b) is added to a premixture (a), which is liquid at room temperature, of zinc octoate, a low-molecular acidic ester and, if necessary, an organic phosphite, and this mixture of (a) and (b) is added to liquid aromatic diglycidyl ethers.

2. Process for producing transparent casting resins according to claim 1, characterised in that the mixture of (a) and (b) is added to liquid aromatic diglycidyl ethers at temperatures of 50 °C.

3. Process for producing transparent casting resins according to claims 1 and 2, characterised in that diphenyl decyl phosphite is used as an organic phosphite.

4. Process for producing transparent casting resins according to claims 1 to 3, characterised in that a low-molecular acidic ester of the formula

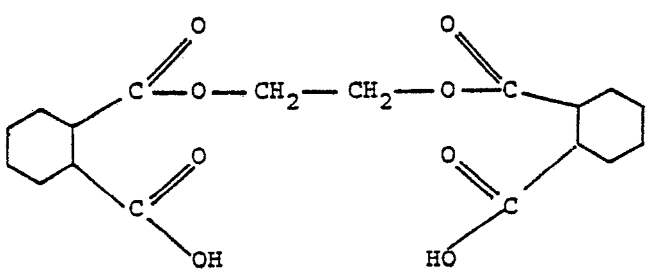

is used.

**Revendications**

1. Procédé de préparation de résines de coulée transparentes, notamment pour des composants optoélectroniques, préparées à partir d'éthers diglycidyliques liquides aromatiques, d'anhydrides d'acide carboxylique, de sels métalliques d'acides carboxyliques et d'adjuvants et d'additifs, caractérisé en ce qu'il consiste à mélanger à un mélange-maître (a), liquide à la température ambiante et constitué d'octoate de zinc, d'un ester acide à bas poids moléculaire et, le cas échéant, d'un phosphite organique, un anhydride d'acide (b) liquide et à ajouter ce mélange constitué de (a) et (b) à des éthers diglycidyliques aromatiques liquides.

2. Procédé de préparation de résines de coulée transparentes suivant la revendication 1, caractérisé en ce qu'il consiste à ajouter le mélange constitué de (a) et (b) à des éthers diglycidyliques aromatiques liquides, à des températures inférieures ou égales à 50 °C.

3. Procédé de préparation de résines de coulée transparentes suivant les revendications 1 et 2, caractérisé en ce qu'il consiste à utiliser comme phosphite organique du diphényldécylphosphite.

4. Procédé de préparation de résines de coulée transparentes suivant les revendications 1 à 3, caractérisé en ce qu'il consiste à utiliser un ester acide à bas poids moléculaire de formule